# FASCICULE DE BREVET EUROPEEN

(11) **EP 1 076 470 B1**
(45) Date de publication et mention de la délivrance du brevet: **17.03.2010**
(21) Numéro de dépôt: 00402020.2
(22) Date de dépôt: 13.07.2000
(51) Int. Cl.: H04Q 11/00

(54) **Sélecteur hybride spatial et spectral et matrice de commutation optique incluant de tels sélecteurs**
Hybrider Raum-und Wellenlängenschalter und aus diesen Schaltelementen bestehende optische Schaltmatrix
Hybrid space and wavelength selector and optical switching matrix containing such selectors

(30) Priorité: 09.08.1999 FR 9910312
(43) Date de publication de la demande: 14.02.2001
(73) Titulaire: Alcatel Lucent, 75008 Paris (FR)
(72) Inventeur: Jourdan, Amaury, 92310 Sèvres (FR); Bruyere, Franck, 75014 Paris (FR); Chiaroni, Dominique, 92160 Antony (FR); Noirie, Ludovic, 92220 Bagneux (FR)
(74) Mandataire: Sciaux, Edmond

(56) Documents cités:
- EP-A- 0 429 046
- EP-A- 0 853 440

## Description

La présente invention trouve application dans les réseaux de transmission d'information. Dans de tels réseaux, des ondes optiques sont guidées par des fibres après avoir été modulées pour porter les informations à transmettre. Avant leur modulation ces ondes ont usuellement diverses longueurs d'onde prédéterminées dites longueurs d'onde du réseau. Cette invention concerne la réalisation des matrices de commutation qui sont incluses dans les noeuds de tels réseaux et plus spécifiquement celle de sélecteurs utilisés par ces matrices. Un tel sélecteur a un ou plusieurs ports d'entrée sur le ou lesquels il reçoit certaines des dites ondes optiques. Il reçoit par ailleurs un ordre de sélection sous la forme d'un signal électrique désignant l'une au moins de ces ondes. Il a un ou plusieurs ports de sortie sur le ou lesquels il transmet certaines de ces ondes qui lui ont été désignées par cet ordre.

Il peut être d'un type dit spatial. Il a alors plusieurs ports d'entrée et il sélectionne les ondes selon le ou les ports d'entrée sur lesquels elles sont reçues. Il peut aussi être d'un type dit spectral. Il sélectionne alors les ondes selon leurs longueurs d'onde. Lorsqu'il sera dit ci-après qu'une certaine longueur d'onde ou que les ondes ayant cette dernière sont sélectionnées, ou qu'un trajet est affecté à cette longueur d'onde, cela impliquera que cette longueur d'onde est l'une des longueurs d'onde du réseau, que les ondes sélectionnées sont certaines des ondes optiques précédemment mentionnées, et que c'est à ces ondes qu'un trajet est affecté. Les ondes sélectionnées sont non seulement d'éventuelles ondes pures, c'est à dire des ondes non modulées ayant précisément une longueur d'onde du réseau, mais aussi et plus typiquement des ondes porteuses qui résultent de la modulation d'une onde pure correspondante par une information à transmettre et qui s'étendent donc sur une bande spectrale incluant cette longueur d'onde. La largeur de cette bande spectrale est typiquement voisine de 0,1 nm pour un débit d'information de 10 Gbits/s. Toute onde optique dont la longueur d'onde serait éventuellement située dans cette bande ou en serait suffisamment proche serait alors sélectionnée de même. Une telle onde sera dite ci-après « associée » à cette longueur d'onde du réseau.

Un sélecteur sera dit ci-après « hybride » s'il est à la fois spatial et spectral. Un tel sélecteur typique transmet à son unique port de sortie les ondes qui sont reçues sur l'un de ses ports d'entrée et qui ont l'une des longueurs d'onde du réseau, ce port et cette longueur d'onde étant ceux qui sont désignés par l'ordre de sélection.

Dans les sélecteurs considérés ci-après la sélection d'une onde est réalisée par l'ouverture d'une porte optique. Cette porte n'étant sensible ni au port d'entrée de cette onde ni à sa longueur d'onde, elle ne peut assurer sa fonction de sélection que parce qu'elle est située sur un trajet affecté à cette onde. Dans le cas d'un sélecteur spectral, il est donc nécessaire que des moyens spécifiques soient associés au sélecteur pour affecter divers trajets aux ondes selon leurs longueurs d'onde. Ces moyens seront dits ci-après «système de séparation spectrale»

Un premier et un deuxième sélecteurs hybrides connus comportent tous deux, d'amont en aval selon le sens de propagation des ondes, d'abord un sélecteur spatial, puis un sélecteur spectral. Chacun de ces sélecteurs a plusieurs ports d'entrée respectivement reliés à plusieurs ports de sortie par des portes optiques. Un système intermédiaire relie chacun des ports de sortie du sélecteur spatial à chacun des ports d'entrée du sélecteur spectral. Il constitue un dit système de séparation spectrale, c'est à dire que, parmi les ondes qu'il reçoit de chacun de ces ports de sortie, il transmet à chacun de ces ports d'entrée, les seules ondes qui sont associées à une longueur d'onde du réseau unique et dépendant de ce port d'entrée. Un système de sortie relie chacun des ports de sortie du sélecteur spectral au port de sortie du sélecteur hybride.

Le premier des dits sélecteurs connus est décrit dans un article de A. Jourdan et al « Design and Implementation of a Fully Reconfigurable All-optical Cross-connect for High-capacity Multi-wavelength Transport Network », IEEE Journal of Lightwave Technology, vol 14 n° 6, p. 1198 Juin 1996.

Il présente l'inconvénient que son système intermédiaire cumule, en ce qui concerne la puissance des ondes à transmettre, les pertes d'un combineur recevant les ondes en sortie du sélecteur spatial et celles d'un multiplexeur réalisant ensuite la séparation spectrale.

C'est pourquoi, dans le deuxième sélecteur hybride connu, le système intermédiaire est constitué par un routeur qui oriente les ondes selon leurs longueurs d'onde dès leur sortie du sélecteur spatial. Ce deuxième sélecteur connu est décrit dans un article « A 2.56 Tb/s Throughput Packet/Cell-Based Optical Switch-Fabric Demonstrator » S. Araki, S. Takahashi, Y. Maeno, Y. Suemura, A. Tajima, H. Takahashi, K. Matsuda, T. Tamanuki, S. Dohmae, N. Henmi-ECOC'98, 20-24 September, Madrid, Spain. Il présente l'inconvénient que les ondes porteuses qu'il transmet sont affectées d'un bruit important.

La présente invention a notamment pour but de réaliser d'une manière simple et peu coûteuse un sélecteur hybride ayant à la fois de faibles pertes internes et un faible bruit de sortie.

Et dans ce but elle a notamment pour objet un sélecteur hybride incluant des moyens de guidage définissant pour des ondes optiques ayant diverses longueurs d'onde des trajets entre des ports d'entrée recevant ces ondes et au moins un port de sortie, ces moyens incluant un système de séparation spectrale affectant certains de ces trajets à ces ondes selon leurs longueurs d'onde, ce sélecteur incluant en outre une pluralité de portes optiques placées sur les dits trajets et aptes chacune à être ouverte ou fermée pour que celles desdites ondes qui parviennent au dit port de sortie via celles de ces portes qui sont ouvertes soient sélectionnées par ces portes à la fois selon les dits ports d'entrée qui ont reçu ces ondes et selon leurs longueurs d'onde, ce sélecteur étant caractérisé par le fait que ledit système de séparation spectrale est situé seulement entre la dite pluralité de portes optiques et le dit port de sortie .

Pour permettre à certaines des portes optiques des sélecteurs hybrides connus d'assurer la fonction de sélection spectrale, le système de séparation spectrale de ces sélecteurs a toujours été situé, sur les trajets suivis par les ondes optiques, en amont de ces portes. Dans le cadre de la présente invention il a non seulement été considéré que, pour assurer l'affectation de certains trajets à certaines longueurs d'onde, un tel système pouvait tout aussi bien agir sur les ondes optiques après qu'elles aient franchi toutes les portes optiques, mais il est aussi apparu que cette nouvelle disposition avait des avantages : Elle offre au concepteur d'une matrice de commutation optique un choix plus large pour l'agencement des trajets intermédiaires s'étendant entre ces portes, et elle permet ainsi, sans coût supplémentaire, soit de diminuer les pertes de puissance optique sur ces trajets, soit de diminuer le bruit en sortie du sélecteur.
Ces avantages seront mieux compris à l'aide de la description donnée ci-après à simple titre d'exemple ainsi que des figures schématiques 1 à 7 qui y sont jointes.

La figure 1 représente de manière simplifiée une matrice de commutation d'un type connu incluant des sélecteurs hybrides, ces derniers pouvant aussi bien être des sélecteurs selon cette invention que des sélecteurs de types connus.

La figure 2 représente un premier sélecteur hybride connu.

La figure 3 représente un deuxième sélecteur hybride connu.

La figure 4 représente un sélecteur hybride réalisé selon cette invention.

La figure 5 représente de manière simplifiée un coupleur pouvant être inclus dans le sélecteur de la figure 4.

La figure 6 représente un premier mode de réalisation du sélecteur de la figure 4.

La figure 7 représente un deuxième mode de réalisation du sélecteur de la figure 4.

De même que les deux dits sélecteurs connus, le sélecteur SH de cette invention inclut un sélecteur spatial et un sélecteur spectral.
Le sélecteur spatial SS inclut une succession de n portes optiques telles que G1 et G2 respectivement associées à une succession de n ports d'entrée tels que A1 et A2 dudit sélecteur hybride et à une succession de n ports de sortie tels que B1 et B2 de ce sélecteur spatial. Chacune de ces portes est apte à être sur commande, soit ouverte, soit fermée pour, soit connecter, soit ne pas connecter l'un à l'autre les deux ports d'entrée et de sortie qui sont associés à cette porte. Les ondes optiques reçues sur un port d'entrée associé à une telle porte ouverte sont transmises au port de sortie associé à la même porte où elles constituent des ondes de sortie de ce sélecteur spatial. Chacune de ces portes est classiquement constituée par un amplificateur optique à semi-conducteur dont l'alimentation électrique est coupée lorsque la porte doit être fermée. Lorsqu'elle est ouverte, elle a, pour la puissance des ondes qui la traversent, un gain tel que 18 dB. Par ailleurs elle a un bruit propre qui altère les signaux portés par ces ondes.

Le sélecteur spectral SW inclut une succession de m portes optiques telles que H1 et H2 respectivement associées à une succession de m ports d'entrée tels que C1 et C2 de ce sélecteur spectral et à une succession de m ports de sortie tels que D1 et D2 de ce même sélecteur, la lettre m désignant le nombre des longueurs d'onde du réseau. Ces portes sont du même type que celles du sélecteur SS, chacune d'elles étant donc apte à être sur commande soit ouverte, soit fermée pour, soit connecter, soit ne pas connecter l'un à l'autre les deux ports d'entrée et de sortie qui sont associés à cette porte. Comme son nom l'indique le sélecteur SW a pour fonction de sélectionner des ondes lumineuses selon leurs longueurs d'onde. Mais les portes optiques qui le constituent ne sont pas sensibles à ces longueurs d'onde. C'est pourquoi elles doivent être placées sur des trajets respectivement affectés aux longueurs d'onde du réseau. L'ensemble des trajets suivis par les ondes optiques étant défini par les moyens de guidage du sélecteur, l'affectation de certains d'entre eux à certaines longueurs d'onde doit être effectuée par un système de séparation spectrale inclus dans ces moyens.

Ces moyens de guidage incluent :
- un système intermédiaire apte à connecter chacun des ports de sortie tels que B1 et B2 du sélecteur spatial SS à chacun des ports d'entrée tels que C1 et C2 du sélecteur spectral SW, et
- un système de sortie reliant chacun des ports de sortie tels que D1 et D2 du sélecteur spectral au port de sortie E du sélecteur hybride.

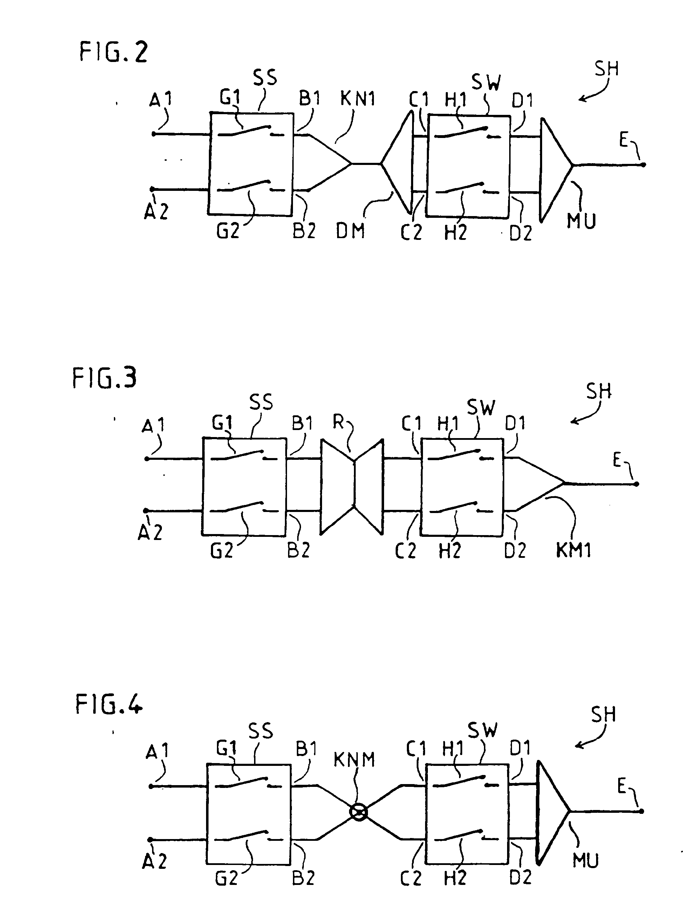

Dans le premier sélecteur hybride connu précédemment mentionné représenté à la figure 2, le système intermédiaire inclut d'abord un combineur KN1 de la classe nxl qui rassemble toutes les ondes pouvant apparaître en sortie du sélecteur spatial SS. Il inclut ensuite un démultiplexeur DM qui oriente chacune de ces ondes, selon sa longueur d'onde, vers l'un des ports d'entrée du sélecteur spectral SW. Quant au système de sortie, il est constitué par un multiplexeur MU.

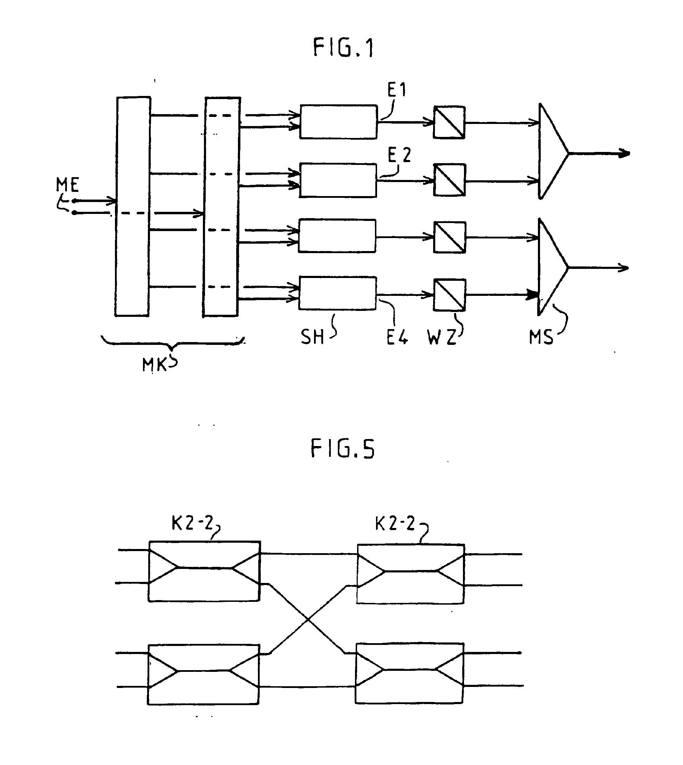

Le combineur KN1 peut être constitué par une succession d'étages formés par des coupleurs à quatre branches tels que le coupleur K2.2 de la figure 5. Si le nombre n est égal à 2^{q}, l'exposant q étant un nombre entier, un tel combineur provoque, pour la puissance de chaque onde optique, des pertes d'au moins 3.q dB, c'est à dire, si par exemple n=32, d'au moins 15 dB, par exemple 18 dB. De même que le multiplexeur MU, le démultiplexeur DM oriente les ondes optiques selon leurs longueurs d'onde respectives et il provoque, pour leurs puissances, des pertes à peu près indépendantes du nombre m et de l'ordre de 5 à 10 dB. Le premier sélecteur hybride connu présente alors l'inconvénient que les pertes subies par une onde entre le sélecteur spatial et le sélecteur spectral, par exemple 18 dB + 10 dB = 28 dB, sont trop grandes pour être facilement compensées par le gain de la porte optique que cette onde franchira dans le sélecteur spectral.

Dans le deuxième sélecteur hybride connu représenté à la figure 3, le système intermédiaire présente la forme d'un routeur R. Ce dernier transmet chaque onde de sortie du sélecteur spatial SS à un port d'entrée tel que C1 ou C2 du sélecteur spectral SW. Ce port dépend à la fois de la longueur d'onde de cette onde et du port tel que B1 ou B2 par lequel cette onde a été transmise en sortie du sélecteur spatial. Quant au système de sortie il est constitué par un combineur KM1 de la classe mxl. Les pertes du routeur R sont voisines de celles d'un multiplexeur ou d'un démultiplexeur et elles sont donc compensées par le gain des portes optiques. Les pertes du combineur KM1 sont celles qui ont été indiquées ci-avant por le combineur KN1. Elles sont par exemple voisines de 18 dB si m= 32.

Conformément à la figure 4 le sélecteur hybride SH de cette invention est caractérisé par le fait que son ensemble intermédiaire KNM définit, pour les ondes de sortie du sélecteur spatial SS, des trajets indépendants de leurs longueurs d'onde respectives, et que c'est son système de sortie MU qui constitue donc à lui seul son système de séparation spectrale. C'est à dire que ce système MU associe respectivement une succession de domaines spectraux prédéterminés à la succession des ports de sortie du sélecteur spectral SW et qu'il transmet une onde optique de l'un de ces ports de sortie tel que D1 ou D2 au port de sortie E du sélecteur hybride seulement si la longueur d'onde de cette onde est comprise dans le domaine associé à ce port. Un tel domaine spectral contient typiquement les d'ondes associées à une seule des longueurs d'onde du réseau. Mais il pourrait en être autrement.

De préférence l'ensemble intermédiaire KNM présente la forme d'un coupleur « en étoile » de la classe n x m. Ce coupleur sera dit « intermédiaire ». Il a une entrée pour chacun des ports de sortie tels que B1 et B2 du sélecteur spatial SS et une sortie pour chacun des ports d'entrée tels que C1 et C2 du sélecteur spectral SW et il relie chacune de ses entrées à chacune de ses sorties.

De préférence encore le nombre n des ports de sortie du sélecteur spatial SS et le nombre m des ports d'entrée du sélecteur spectral SW sont égaux l'un à l'autre. Ils sont par exemple tous deux égaux au nombre deux élevé à une même puissance p dans le cas où le coupleur intermédiaire KNM est constitué par une succession de p étages incluant chacun le nombre n élevé à la puissance p-1 de coupleurs de la classe 2 x 2. Les nombres m et n sont alors par exemple m=n=32, mais ils pourraient aussi être 16 ou 64, selon d'une part la capacité souhaitée pour une matrice de commutation utilisant ce sélecteur, et d'autre part l'évolution de la technologie. Pour de telles valeurs de ces nombres le coupleur KNM a cependant de préférence une structure de type connu n'incluant pas de tels étages. Mais même dans ce dernier cas le choix de nombres m et n égaux permet de limiter au mieux les pertes d'un coupleur de la classe n x m, qui sont alors sensiblement les mêmes que celles du combineur nxl qui était utilisé dans le premier sélecteur connu. La figure 5 illustre un cas simplifié où un tel coupleur est du type à étages et où m=n=4.

Les m longueurs d'onde du réseau se succèdent par exemple avec un pas de 0,8 nm entre 1 530 et 1 560 nm environ.

Le système de sortie MU est avantageusement constitué par un multiplexeur d'un type connu permettant d'associer un intervalle spectral étroit à chacune de ses entrées, de sorte que ce système assure ainsi un filtrage efficace du bruit en aval de chacune des portes du sélecteur spectral. Par ailleurs les pertes et le coût d'un tel multiplexeur sont limités de sorte que, par rapport au deuxième sélecteur connu, l'avantage constitué par cette efficacité de filtrage est obtenu sans contrepartie quant au bilan des puissances optiques et même avec avantage quant au bilan économique. Le multiplexeur MU sera dit ci-après « multiplexeur de sortie ».

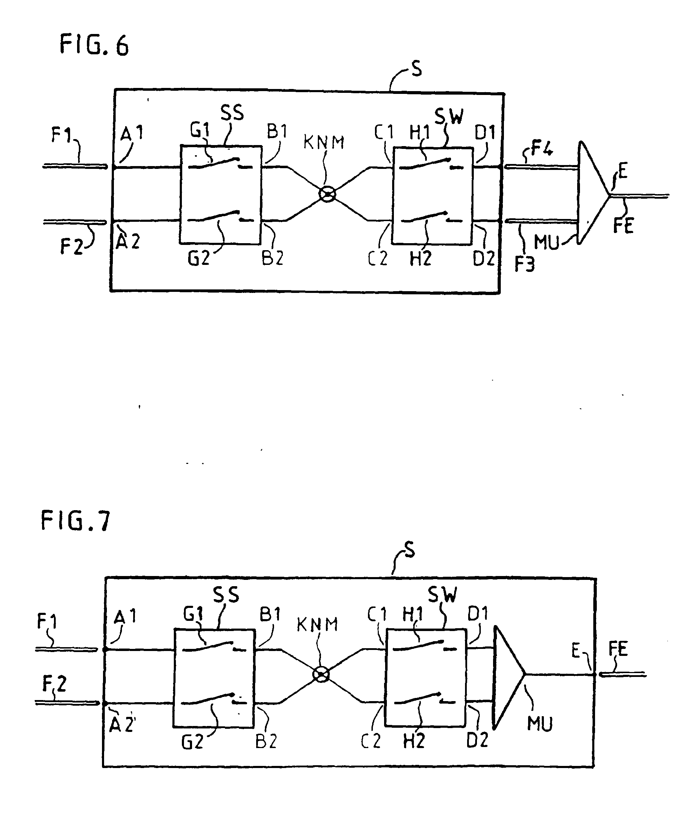

Le sélecteur hybride de la présente invention peut avantageusement être réalisé sous une forme partiellement ou totalement intégrée sur un substrat de silicium tel que le substrat S des figures 6 et 7. Les ports d'entrée tels que A1 et A2 de ce sélecteur sont alors alimentés par une nappe de fibres telles que F1 et F2 et son port de sortie E alimente une fibre optique de sortie FE. Ces fibres sont représentées par des traits doubles alors que les guides de lumière formés dans le substrat sont représentés par des traits simples.

Conformément à la figure 6 les portes telles que G1, G2, H1 et H2 constituant les sélecteurs spatial et spectral SS et SW sont formées dans une ou deux plaquettes de phosphure d'indium fixées sur le substrat S. Le coupleur intermédiaire KNM peut être formé dans la même plaquette, mais il peut être avantageux de le former plutôt selon la technique dite Si02/Si sur ce substrat. Les guides de lumière de ce combineur sont alors formés dans la silice et le sélecteur est dit « hybridé» parce que ses composants sont formés dans deux matériaux de base différents. Les ports de sortie tels que D1 et D2 alimentent alors le multiplexeur de sortie MU par l'intermédiaire d'une nappe de fibres telles que F3 et F4, le type de ce multiplexeur pouvant alors être choisi parmi divers types connus.

Conformément à la figure 7 le substrat S d'un deuxième mode de réalisation porte les éléments portés par le substrat de la figure 6, mais aussi le multiplexeur de sortie MU. De même que le coupleur intermédiaire, ce multiplexeur peut être formé soit dans une plaquette de phosphure d'indium incluant les sélecteurs SS et SW, soit plutôt sur une plaquette de silicium rapportée sur le substrat S. Il est alors de préférence du type connu dit en anglais « arrayed waveguide grating » pour « réseau déployé de guides d'ondes ».

Cette invention a aussi pour objet une matrice de commutation optique illustrée à la figure 1. Cette matrice inclut :
- un nombre n d'entrées de matrice telles que ME pour recevoir chacune un multiplex d'entrée constitué d'ondes optiques associées à m longueurs d'onde d'un réseau,
- un nombre m.n de sélecteurs hybrides tels que SH aptes chacun à recevoir un ordre de sélection et ayant chacun n ports d'entrée tels que A1 et A2 et un port de sortie tels que E1,...E4, et aptes chacun à relier ce port de sortie à l'un de ces ports d'entrée désigné par cet ordre pour l'une de ces longueurs d'onde désignée par cet ordre, et
- un coupleur d'entrée MK reliant chacune des entrées de matrice telles que ME à chacun des ports d'entrée tels que A1 et A2 des sélecteurs hybrides.

Par rapport à des matrices connues cette matrice est caractérisée par le fait que certains au moins de ses sélecteurs hybrides sont tels que le sélecteur SH précédemment décrit.

Dans le but de faciliter la compréhension, la figure 1 illustre le cas très simplifié où m=n=2.

Selon une disposition souvent utile, certains au moins, et par exemple la totalité, des ports de sortie tels que E1,...E4 alimentent chacun un transpondeur tel que WZ apte à réaliser une adaptation de longueur d'onde et /ou une régénération de signal.

Selon une autre telle disposition, certains au moins, et par exemple la totalité, des ports de sortie tels que E1,..., E4 forment des groupes incluant chacun plusieurs tels ports, par exemple m tels ports tels que E1 et E2, et tous les ports de sortie de chacun de ces groupes alimentent un multiplexeur tel que MS de ce groupe.

Une telle matrice constitue typiquement un élément essentiel d'un noeud d'un réseau à fibres optiques. Dans ce cas certaines des entrées de cette matrice sont alimentées par des ondes provenant d'un autre noeud de ce réseau et certaines autres de ces entrées le sont par des ondes introduites dans ce réseau par le noeud incluant cette matrice. Des sorties de cette matrice sont constituées chacune par le port de sortie d'un dit sélecteur hybride, soit par la sortie d'un dit transpondeur, soit par celle d'un dit multiplexeur d'un dit groupe de sélecteurs hybrides. Certaines de ces sorties de matrice alimentent des fibres allant vers un autre noeud du réseau et certaines autres alimentent des fibres propres au noeud incluant cette matrice. Ce noeud inclut en outre un organe de gestion non représenté qui est informé du trafic devant être acheminé par le réseau. En réponse cet organe fournit divers signaux tels que les ordres de sélection qui commandent les portes optiques des sélecteurs tels que SH.

## Revendications

1. Sélecteur hybride spatial et spectral pour matrice de commutation optique, ce sélecteur incluant des moyens de guidage (KNM) définissant pour des ondes optiques ayant diverses longueurs d'onde des trajets entre des ports d'entrée (A1, A2) recevant ces ondes et au moins un port de sortie (E), ces moyens incluant un système de séparation spectrale (MU) affectant certains de ces trajets à ces ondes selon leurs longueurs d'onde,
ce sélecteur incluant en outre une pluralité de portes (G1,G2,H1,H2) placées sur les dits trajets et aptes chacune à être ouverte ou fermée de manière que celles desdites ondes qui parviennent au dit port de sortie via celles de ces portes qui sont ouvertes soient sélectionnées à la fois selon lesdits ports d'entrée qui ont reçu ces ondes et selon leurs dites longueurs d'onde,
ce sélecteur étant **caractérisé par le fait que** ledit système de séparation spectrale (MU) est situé seulement entre ladite pluralité de portes optiques (G1,G2,H1,H2) et le dit port de sortie (E).

2. Sélecteur hybride selon la revendication 1, ce sélecteur (SH) incluant :
- un sélecteur spatial (SS) incluant une succession de n portes optiques (G1,G2) respectivement associées à une succession de n ports d'entrée (A1,A2) dudit sélecteur hybride et à une succession de n ports de sortie (B1,B2) de ce sélecteur spatial, chacune de ces portes optiques étant apte à être sur commande soit ouverte, soit fermée pour, soit connecter, soit ne pas connecter, respectivement, ledit port d'entrée associé à cette porte au dit port de sortie associé à cette porte, de manière à permettre à des ondes optiques reçues sur un dit port d'entrée associé à une dite porte optique ouverte d'être transmises audit port de sortie associé à cette porte pour y constituer des ondes de sortie de ce sélecteur spatial, ces ondes ayant des longueurs d'onde respectives,
- un sélecteur spectral (SW) incluant une succession de m portes optiques (H1,H2) respectivement associées à une succession de m ports d'entrée (C1,C2) de ce sélecteur spectral et à une succession de m ports de sortie (D1,D2) de ce même sélecteur, chacune de ces portes étant apte à être sur commande soit ouverte pour connecter, soit fermée pour ne pas connecter, respectivement, ledit port d'entrée associé à cette porte audit port de sortie associé à cette porte, et
- les dits moyens de guidage, ces moyens incluant :
- un système intermédiaire (KNM) apte à connecter chacun des dits ports de sortie (B1,B2) du sélecteur spatial (SS) à chacun desdits ports d'entrée (C1,C2) du sélecteur spectral (SW), et
- un système de sortie (MU) reliant chacun desdits ports de sortie (D1,D2) du sélecteur spectral audit port de sortie (E) du sélecteur hybride,
ledit sélecteur hybride(SH) étant **caractérisé par le fait que** ledit ensemble intermédiaire (KNM) définit, pour lesdites ondes de sortie du sélecteur spatial (SS), des trajets indépendants de leurs longueurs d'onde respectives, ledit système de sortie (MU) associant respectivement une succession de domaines spectraux prédéterminés à ladite succession des ports de sortie du sélecteur spectral et transmettant une onde optique de l'un de ces ports de sortie (D1, D2) audit port de sortie (E) du sélecteur hybride seulement si la longueur d'onde de cette onde est comprise dans ledit domaine spectral associé à ce port de sortie du sélecteur spectral, grâce à quoi ce système de sortie constitue ledit système de séparation spectrale.

3. Sélecteur hybride selon la revendication 2, ce sélecteur (SH) étant **caractérisé par le fait que** ledit ensemble intermédiaire est un coupleur de la classe n x m constituant un coupleur intermédiaire (KNM) et ayant une entrée pour chaque dit port de sortie (B1,B2) du sélecteur spatial (SS) et une sortie pour chaque dit port d'entrée (C1,C2 ) du sélecteur spectral (SW), ce coupleur reliant chacune de ses dites entrées à chacune de ses dites sorties.

4. Sélecteur hybride selon la revendication 3, ce sélecteur (SH) étant **caractérisé par le fait que** le nombre n des dits ports de sortie du sélecteur spatial (SS) et le nombre m des dits ports d'entrée du sélecteur spectral (SW) sont égaux l'un à l'autre.

5. Sélecteur hybride selon la revendication 2, ledit système de sortie étant constitué par un multiplexeur (MU).

6. Sélecteur hybride selon la revendication 2, ledit sélecteur spatial (SS) ledit coupleur intermédiaire (KNM) et ledit sélecteur spectral (SW) étant portés par un même substrat (S).

7. Sélecteur hybride selon la revendication 6, ledit substrat (S) portant en outre ledit système de sortie (MU).

8. Matrice de commutation optique, cette matrice incluant :
- un nombre n d'entrées de matrice (ME) pour recevoir chacune un multiplex d'entrée constitué d'ondes optiques associées à m longueurs d'onde d'un réseau,
- un nombre m.n de sélecteurs hybrides (SH) apte à recevoir un ordre de sélection et ayant chacun n ports d'entrée (A1, A2) et un port de sortie (E1,..., E4), et aptes chacun à relier ce port de sortie à l'un de ces ports d'entrée désigné par cet ordre pour l'une de ces longueurs d'onde désignée par cet ordre, et
- un coupleur d'entrée (MK) reliant chacune des dites entrées de matrice (ME) à chacun des dits ports d'entrée (A1,A2) des sélecteurs hybrides,
cette matrice étant **caractérisée par le fait que** certains au moins desdits sélecteurs hybrides (SH) sont des sélecteurs selon l'une quelconque des revendications 1 à 7.

9. Matrice selon la revendication 8, certains au moins des dits ports de sortie (E1,...E4) alimentant chacun un transpondeur (WZ) apte à réaliser une adaptation de longueur d'onde et /ou une régénération de signal.

10. Matrice selon la revendication 8, certains au moins des dits ports de sortie (E1...E4) formant des groupes (E1, E2) incluant chacun plusieurs tels ports, tous les ports de sortie de chacun de ces groupes alimentant un multiplexeur (MS) de ce groupe.

## Claims

1. A hybrid space- and wavelength-selector for an optical switching matrix, which selector includes guiding means (KNM) defining, for optical waves having various wavelengths, pathways between input ports (A1, A2) receiving these waves and at least one output port (E), which means include a wavelength-separation system (MU) assigning some of these pathways to these waves in accordance with their wavelengths,
which selector includes a plurality of gates (G1, G2, H1, H2) placed on said pathways and each capable of being opened or closed such that those of said waves which reach said output port via those of said gates which are open are selected both depending on said input ports which received these waves and depending on their said wavelengths,
which selector is **characterized by** the fact that said wavelength-separation system (MU) is located only between said plurality of optical gates (G1, G2, H1, H2) and said output port (E).

2. A hybrid selector according to claim 1, which selector (SH) includes:
- a space-selector (SS) including a succession of n optical gates (G1, G2) respectively associated with a succession of n input ports (A1, A2) of said hybrid selector and with a succession of n output ports (B1, B2) of that space-seleotor, each of these optical gates being capable of being either opened or closed on command, in order to connector not connect, respectively, said input port associated with that gate to said output port associated with that gate, so as to enable optical waves received at a said input port associated with a said open optical gate to be transmitted to said output port associated with that gate in order to constitute output waves of that space-selector there, these waves having respective wavelengths,
- a wavelength-selector (SW) including a succession of m optical gates (H1, H2) respectively associated with a succession of m input ports (C1, C2) of that wavelength-selector and with a succession of m output ports (D1, D2) of that same selector, each of these gates being capable of being either opened or closed on command, in order to connect or not connect, respectively, said input port associated with that gate to said output port associated with that gate, and
- said guiding means, which means include:
- an intermediate system (KNM) capable of connecting each of said output ports (B1, B2) of the space-selector (SS) to each of said input ports (C1, C2) of the wavelength-selector (SW), and
- an ouput system (MU) connecting each of said output pouts (D1, D2) of the wavelength-selector to said output port (E) of the hybrid selector,
said hybrid selector (SH) being **characterized by** the fact that said intermediate assembly (KNM) defines, for said output waves of the space-selector (SS), pathways independent of their respective wavelengths, said output system (MU) respectively associating a succession of predetermined wavelength domains to said succession of the output ports of the wavelength-selector and transmitting an optical wave from one of these output ports (D1, D2) to said output port (E) of the hybrid selector only if the wavelength of that wave falls within said wavelength domain associated with that output port of the wavelength-selector whereby this output system constitutes the wavelength-separation system.

3. A hybrid selector according to claim 2. which -selector (SH) is **characterized by** the fact that said intermediate assembly is a coupler of the class "n x m" constituting an intermediate coupler (KNM) and having an input for each said output port (B1, 82) of the space-selector (S3) and an output for each said input port (C1, C2) of the wavelength-selector (SW), which coupler connects each of its said inputs to each of its said outputs.

4. A hybrid selector according to claim 3, which selector (SH) is **characterized by** the fact that the number n of said output ports of the space-selector (SS) and the number m of said input ports of the wavelengt-selector (SW) are equal to one another.

5. A hybrid selector according to claim 2, said output system being constituted by a multiplexer (MU).

6. A hybrid selector according to claim 2, said space-setecaor (SS), said intermediate coupler (KNM) and said wavelengths-selectors (SW) being borne by the same substrate (S).

7. A hybrid selector according to claim 6, said substrate (S) further bearing said output system (MU),

8. An optical switching matrix, which matrix includes:
- a number n of matrix inputs (ME) each for receiving a multiplex of inputs made up of optical waves associated with m wavelengths of a network,
- a number m.n of hybrid selectors (SH) capable of receiving a selection order and each having n input ports (A1, A2) and an output port (E1,..., E4), and each capable of connecting this output port to one of these input ports designated by that order for one of those wavelengths designated by that order, and
- an input coupler (MK) connecting each of said matrix inputs (ME) to each of said input ports (A1, A2) of the hybrid selectors,
this matrix being **characterized by** the fact that at least some of said hybrid selector (SH) are selectors according to any one of claims 1 to 7.

9. A matrix according to claim 8, at least some of said output ports (E1,...E4) each feeding into a transponder (WZ) capable of adapting a wavelength and/or of regenerating a signal.

10. A matrix according to claim 8, at least some of said output ports (E1 ...E4) forming groups (E1, E2) each including several such ports, all the output ports of these groups feeding into a multiplexer (MS) of that group.

## Patentansprüche

1. Hybrider Raum- und Spektralselektor für eine optische Schaltmatrix, wobei dieser Selektor Führungsmittel (KNM) umfasst, welche für optische Wollen mit verschiedenen wellenlängen Strecken zwischen diese Wellen empfangenden Eingangsports (A1, A2) und zumindest einem Ausgangsport (E) definieren, wobei diese Mittel ein System zur spektralen Aufspaltung (MU), welche auf bestimmte der besagten Strecken an diesen Wellen je nach deren Wellenlängen einwirkt, umfassen,
wobei dieser Selektor weiterhin eine Vielzahl von Gattern (G1, G2, H1, H2) umfasst, welche auf den besagten Strecken angeordnet sind und jeweils geöffnet oder geschlossen werden können, so dass die besagten Wellen, welche über diejenigen der Gatter, die geöffnet sind, an dem besagten Ausgangsport ankommen, sowohl gemäß den besagten Eingangsports, weiche diese Wellen empfangen haben, als auch gemäß ihren besagten Wellenlängen ausgewählt werden,
wobei dieser Selektor **dadurch gekennzeichnet ist, dass** das besagte System zur spektralen Aufspaltung (MU) nur zwischen der besagten Vielzahl von optischen Gattern (G1, G2, H1, H2) und dem besagten Ausgangsport (E) angeordnet ist.

2. Hybrider Selektor nach Anspruch 1, wobei dieser Selektor (SH) umfasst:
- Einen Raumselektor (SS) mit einer Folge von n optischen Gattern (G1, G2), welche jeweils einer Folge von n Eingangsports (A1, A2) des besagten hybriden Selektors und einer Folge von n Ausgangsports (B1, B2) dieses Raumselektors zugeordnet sind, wobei ein jedes dieser optischen Gatter dazu ausgelegt ist, auf Befehl entweder geöffnet oder geschlossen zu werden, um den besagten diesem Gatter zugeordneten Eingangsport an den besagten diesem Gatter zugeordneten Ausgangsport jeweils entweder anzuschließen oder nicht anzuschließen, um zu ermöglichen, dass die auf dem besagten einem besagten geöffneten optischen Gatter zugeordneten Eingangsport empfangenen optischen Wellen an den besagten diesem Gatter zugeordneten Ausgangsport übertragen werden, um dort Ausgangswellen dieses Raumselektors zu bilden, wobei diese Wellen entsprechende Wellenlängen aufweisen,
- einen Spektralselektor (SW) mit einer Folge von m optischen Gattern (H1, H2), welche jeweils einer Folge von m Eingangsports (C1, C2) dieses Spektralselektors und einer Folge von m Ausgangsports (D1, D2) dieses selben Selektors zugeordnet sind, wobei ein jedes dieser Gatter dazu ausgelegt ist, auf Befehl entweder geöffnet zu werden, um den besagten diesem Gatter zugeordneten Eingangsport an den besagten diesem Gatter zugeordneten Ausgangsport anzuschlißen oder geschlossen zu werden, um den besagten diesem Gatter zugeordneten Eingangsport nicht an den besagten diesem Gatter zugeordneten Ausgangsport anzuschließen, und
- die besagten Führungsmittel, wobei diese Mittel umfassen:
- Ein Zwischensystem (KNM), dazu ausgelegt, einen jeden der besagten Ausgangsports (B1, B2) des Raumselektors (SS) an einen jeden der besagten Eingangsports (C1, C2) des Spektralselektors (SW) anzuschließen, und
- ein Ausgangssystem (MU), weiches einen jeden der besagten Ausgangsports (D1,D2) des Spektralselektors mit dem besagten Ausgangsport (E) des hybriden Selektors verbindet,
wobei der besagte hybride Selektor (SH) **dadurch gekennzeichnet ist, dass** die besagte Zwischenanordnung (KNM) für die besagten Ausgangswelle des Raumselektors (SS) von ihren jeweiligen Wellenlängen unabhängige Strecken definiert, wobei das besagte Ausgangssystem (MU) der besagten Folge von Ausgangsports des Spektralselektors jeweils eine Folge von vorgegebenen Spektralbereichen zuordnet und nur dann eine optische Welle eines dieser Ausgangsports (D1, D2) an den besagten Ausgangsport (E) des hybriden Selektors überträgt, wenn die Wellenlänge dieser Welle in dem besagten diesem Ausgangsport des Spektralselektors zugeordneten Spektralbereich begriffen ist, wodurch dieses Ausgangssystem das besagte System zur spektralen Aufspaltung bildet.

3. Hybrider Selektor nach Anspruch 2, wobei dieser Selektor (SH) **dadurch gekennzeichnet ist, dass** die besagte Zwischenanordnung ein Koppier der Klasse n x m ist, welcher einen Zwischenkoppler (KNM) bildet und über einen Eingang für einen jeden der besagten Ausgangsports (B1, B2) des Raumselektors (SS) und einen Ausgang für einen jeden der besagten Eingangsports (C1, C2 ) des Spektralselektors (SW) verfügt, wobei der Koppler jeden seiner besagten Eingänge mit jedem seiner besagten Ausgänge verbindet.

4. Hybrider Selektor nach Anspruch 3, wobei dieser Selektor (SH) **dadurch gekennzeichnet ist, dass** die Anzahl n der besagten Ausgangsports des Raumselektors (SS) und die Anzahl m der besagten Eingangsports des Spektralselektors (SW) einander gleich sind.

5. Hybrider Selektor nach Anspruch 2, wobei das besagte Ausgangssystem von einem Multiplexer (MU) gebildet wird.

6. Hybrider Selektor nach Anspruch 2, wobei der besagte Raumselektor (SS), der besagte Zwischenkoppler (KNM) und der besagte Spektralselektor (SW) von einem selben Substrat (S) getragen werden.

7. Hybrider Selektor nach Anspruch 6, wobei das besagte Substrat (S) weiterhin das besagte Ausgangssystem (MU) trägt.

8. Optische Schaltmatrix, wobei diese Matrix umfasst:
- Eine Anzahl n von Matrixeingängen (ME) zum jeweiligen Empfangen eines Eingangsmultiplexes bestehend aus m Wellenlängen eines Netzwerks zugeordneten optischen Wellen,
- eine Anzahl m.n von hybriden Selektoren (SH), welche dazu ausgelegt sind, einen Auswahlbefehl zu empfangen und jeweils n Eingangsports (A1, A2) und einen Ausgangsport (E1,..., E4) aufweisen, sowie jeweils dazu ausgelegt sind, diesen Ausgangsport mit einem dieser durch diesen Befehl bestimmten Eingangsports für eine dieser durch diesen Befehl bestimmten Wellenlängen zu verbinden, und
- einen Eingangskoppler (MK), welcher einen jeden der besagten Matrixeingänge (ME) mit einem jeden der besagten Eingangsports (A1, A2) der hybriden Selektoren verbindet,
wobei diese Matrix **dadurch gekennzeichnet ist, dass** zumindest bestimmte der besagten hybriden Selektoren (SH) Selektoren nach einem beliebigen der Ansprüche 1 bis 7 sind.

9. Matrix nach Anspruch 8, wobei zumindest bestimmte der besagten Ausgangsports (E1....E4) jeweils einen Transponder (WZ) antreiben, welcher dazu ausgelegt ist, eine Wellenlängenanpassung und/oder eine Signalregenerierung durchzuführen.

10. Matrix nach Anspruch 8, wobei zumindest bestimmte der besagten Ausgangsports (E1 ...E4) Gruppen (E1, E2) bilden, von denen eine jede mehrere solcher Ports umfasst, wobei alle Ausgangsports einer jeden dieser Gruppen einen Multiplexer (MS) dieser Gruppe antreiben.
